# EUROPEAN PATENT APPLICATION

(11) **EP 4 717 523 A1**
(43) Date of publication of application: **01.04.2026**
(21) Application number: 25204506.7
(22) Date of filing: 25.09.2025
(51) Int. Cl.: B60Q 1/00, B60Q 1/26, B60Q 1/30, B60Q 1/56, B62J 6/04, B62J 6/05, B62J 45/41, B62J 45/42, F21S 43/14, F21S 43/19, B60Q 1/34, B60Q 1/44, F21W 103/20, F21W 103/35, F21W 103/50, F21W 107/17

(54) **LAMP UNIT FOR STRADDLE-TYPE VEHICLE**

(30) Priority: 26.09.2024 JP 2024167761
(71) Applicant: Kawasaki Motors, Ltd., Akashi, Hyogo 673-8666 (JP)
(72) Inventor: Marika, SATAKE, Akashi-shi, Hyogo, 673-8666 (JP)
(74) Representative: Hoefer & Partner Patentanwälte mbB

(57) **Abstract**

There is provided a lamp unit (20) for a straddle-type vehicle to be disposed on a rear end portion of a vehicle body. The lamp unit (20) includes: two license lamps (26) separated away from each other in a vehicle width direction; and rear lamps (28) disposed on outer sides of the respective license lamps (26) in the vehicle width direction. The license lamps (26) and the rear lamps (28) are housed in a common casing (30).

## Description

### TECHNICAL FIELD

The present disclosure relates to a lamp unit to be disposed on a rear portion of a straddle-type vehicle such as a motorcycle.

### BACKGROUND ART

Lamps such as a turn signal lamp, a stop lamp, and a license lamp are disposed on a rear portion of a straddle-type vehicle such as a motorcycle (for example, JP2022-144720A). In a straddle-type vehicle of JP2022-144720A, stop lamps and a license lamp are integrated to constitute a lamp unit. Accordingly, wiring and a support structure are simplified as compared with a case where wiring of the stop lamps and wiring of the license lamp are separately laid.

In the lamp unit for the straddle-type vehicle of JP2022-144720A, the license lamp is disposed on a central portion in a vehicle width direction, and the stop lamps are disposed outward of the license lamp in the vehicle width direction.

For this reason, for example, it is difficult to irradiate an entire license plate elongated in the vehicle width direction with light.

### SUMMARY OF INVENTION

The disclosure of the present application provides a lamp unit for a straddle-type vehicle that can widely irradiate a license plate while simplifying wiring and a support structure.

According to an illustrative aspect of the present disclosure, a lamp unit for a straddle-type vehicle to be disposed on a rear end portion of a vehicle body includes: two license lamps separated away from each other in a vehicle width direction; and rear lamps disposed on outer sides of the respective license lamps in the vehicle width direction. The license lamps and the rear lamps are housed in a common casing.

According to the lamp unit for a straddle-type vehicle of the present disclosure, by providing two license lamps in the vehicle width direction and performing irradiation from two locations, the license plate can be irradiated over a wide range, and a plate elongated in the vehicle width direction can also be suitably irradiated. In addition, since the license lamps and the rear lamps are housed in and integrated with the common casing, it is not necessary to perform wiring separately for each lamp, and the wiring and a support structure are simplified. In this manner, the lamp unit for a straddle-type vehicle of the present disclosure can achieve both simplification of the wiring and the support structure and wide irradiation of the license plate.

### BRIEF DESCRIPTION OF DRAWINGS

FIG. 1 is a side view illustrating a rear portion of a motorcycle that is a straddle-type vehicle including a lamp unit according to a first embodiment of the present disclosure;
FIG. 2 is a back view of the motorcycle;
FIG. 3 is a perspective view of the lamp unit;
FIG. 4 is a plan view of the lamp unit; and
FIG. 5 is an enlarged perspective view of the rear portion of the motorcycle.

### DESCRIPTION OF EMBODIMENTS

Hereinafter, a preferred embodiment of the present disclosure will be described with reference to the drawings. In the following description, "right" and "left" refer to "right" and "left" as viewed from a driver riding a vehicle. That is, a left-right direction coincides with a vehicle width direction. In addition, "front" and "rear" refer to "front" and "rear" in a traveling direction of the vehicle. That is, a longitudinal direction of a vehicle body coincides with a front-rear direction of the vehicle. In the vehicle width direction, an inner side in the vehicle width direction refers to a side toward a center line of the vehicle body which extends in the front-rear direction, and an outer side in the vehicle width direction refers to a side away from the center line of the vehicle body.

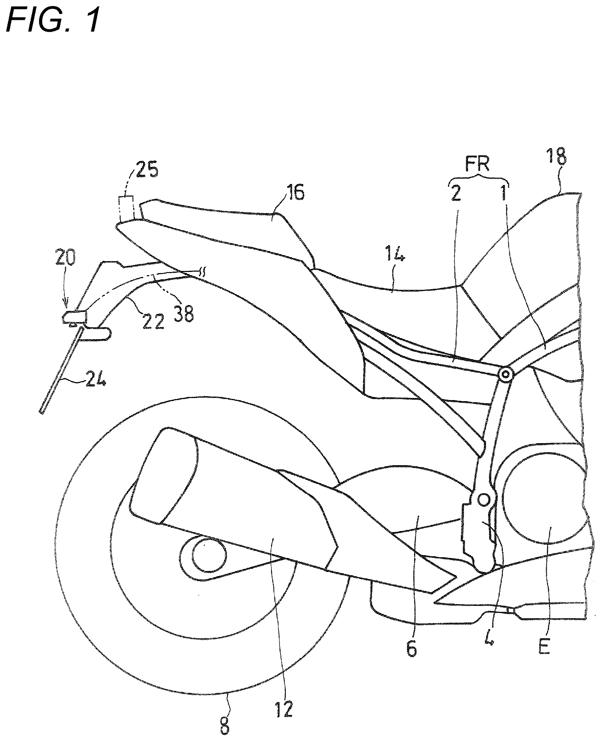

FIG. 1 illustrates a rear portion of a motorcycle that is a straddle-type vehicle as a vehicle including a lamp unit according to a first embodiment of the present disclosure. A vehicle body frame FR of the motorcycle according to the present embodiment includes a main frame 1 corresponding to a front half portion and a rear frame 2 corresponding to a rear half portion. The main frame 1 extends obliquely downward and rearward from a head pipe at a front end. The rear frame 2 extends obliquely upward and rearward from a rear end portion of the main frame 1. The vehicle body frame FR supports an engine that is a drive source of the motorcycle.

The main frame 1 is coupled to a pivot frame 4 at the rear end portion. The pivot frame 4 extends downward from the rear end portion of the main frame 1. The engine is disposed below the main frame 1 and forward of the pivot frame 4.

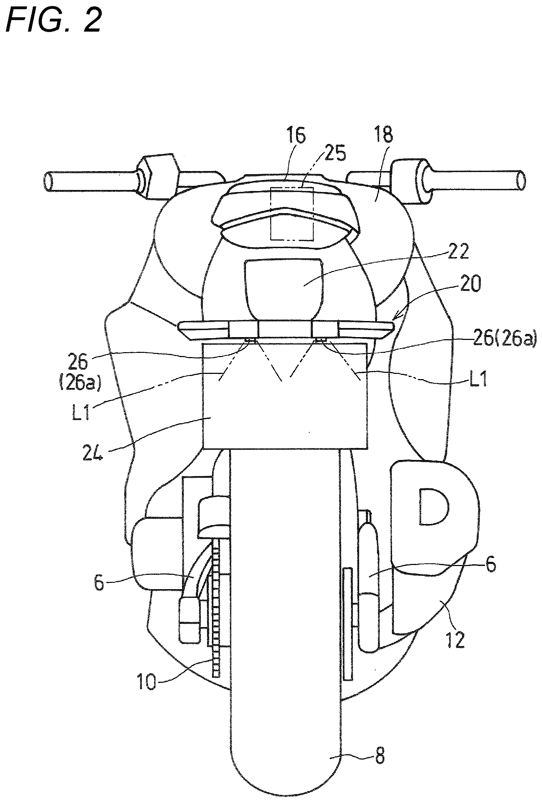

The pivot frame 4 swingably supports a pair of left and right swing arms 6 in an upper-lower direction. The swing arms 6 are attached to a rear wheel 8 at rear end portions thereof. Power of an engine E is transmitted to the rear wheel 8 via a power transmission member 10 illustrated in FIG. 2, so that the rear wheel 8 is driven. The power transmission member 10 is, for example, a drive chain. The power transmission member 10 is not limited to the drive chain, and an endless belt such as a toothed belt may be used. An exhaust muffler 12 is disposed on a right side of the rear wheel 8. The exhaust muffler 12 muffles exhaust from the engine E and discharges the exhaust outside.

As illustrated in FIG. 1, the motorcycle according to the present embodiment further includes a rider seat 14 on which a rider sits, a passenger seat 16 on which a passenger sits, and a fuel tank 18 in which fuel for the engine E is stored. The fuel tank 18 is disposed above the engine E and forward of the rider seat 14. In the present embodiment, the rider seat 14 and the passenger seat 16 are separated, and may also be integrated. The passenger seat 16 may be omitted.

A rear flap 22 is disposed on a rear end portion of a vehicle body. The rear flap 22 extends rearward and obliquely downward from an area below the passenger seat 16. The rear flap 22 is attached to a license plate 24 at a distal end portion thereof.

The motorcycle according to the present embodiment includes a rearview radar 25 indicated by a two-dot chain line on the rear end portion of the vehicle body. The rearview radar 25 detects an object approaching the vehicle body from behind. When approaching of an object is detected by the rearview radar 25, an alarm is displayed on a meter, a rearview mirror, or the like. As illustrated in FIG. 2, the rearview radar 25 is disposed rearward of the passenger seat 16 on a central portion in the vehicle width direction. An arrangement of the rearview radar 25 is not limited thereto, and the rearview radar 25 may be attached to the rear flap 22, for example. The rearview radar 25 may be omitted.

A lamp unit 20 is disposed on the rear end portion of the vehicle body of the motorcycle illustrated in FIG. 1. In the present embodiment, the lamp unit 20 is attached to the rear flap 22. The lamp unit 20 is disposed above the license plate 24 and below the rearview radar 25.

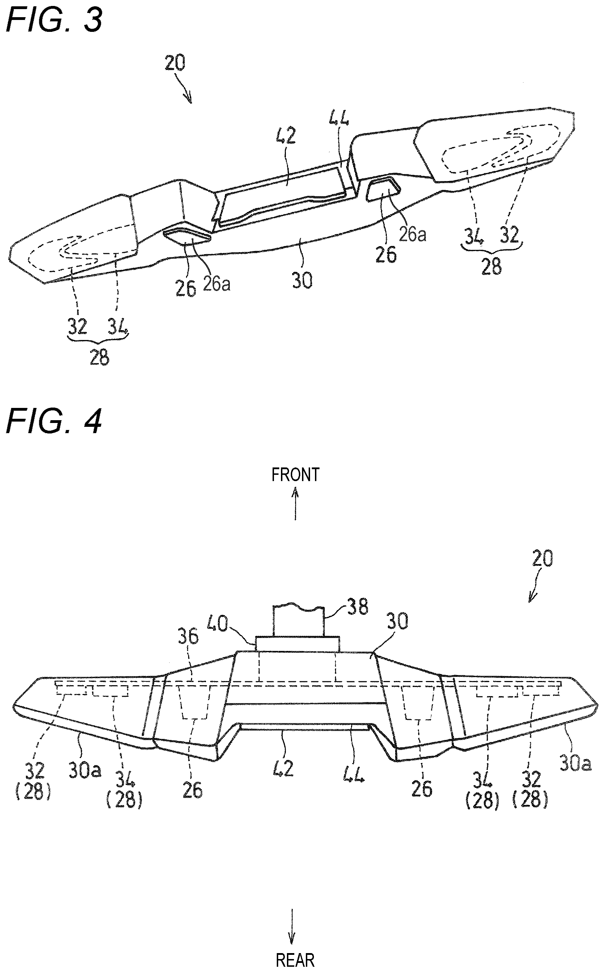

As illustrated in FIG. 3, the lamp unit 20 according to the present embodiment includes two license lamps 26 separated in the vehicle width direction, and rear lamps 28 outward of the respective license lamps 26 in the vehicle width direction. The rear lamps 28 are disposed outward of the respective license lamps 26 in the vehicle width direction. That is, the two rear lamps 28 are also separated away from each other in the vehicle width direction.

The license lamps 26 and the rear lamps 28 are housed in a common casing 30. That is, the license lamps 26 and the rear lamps 28 are housed inside the casing 30 and unitized (integrated) to constitute the lamp unit 20. Accordingly, when the casing 30 is attached to the vehicle body, the license lamps 26 and the rear lamps 28 are also attached to the vehicle body.

The license lamps 26 each have a light emitting surface 26a on a lower surface of the casing 30 and emit light downward. Here, as illustrated in Fig. 3, the light emitting surface 26a is formed such that a lower portion of the license lamp 26 slightly protrudes from the lower surface of the casing 30. As indicated by two-dot chain lines L1 in FIG. 2, the license lamps 26 illuminate the license plate 24 below the license lamps 26 via the light emitting surfaces 26a.

In the present embodiment, as illustrated in FIG. 3, the rear lamps 28 each include a turn signal lamp 32 and a tail lamp 34. The turn signal lamp 32 and the tail lamp 34 are arranged side by side in the vehicle width direction with the tail lamp 34 on an inner side. That is, inside the casing 30 of the lamp unit 20, the license lamp 26, the tail lamp 34, and the turn signal lamp 32 are arranged in this order from the inner side in the vehicle width direction.

In the present embodiment, the turn signal lamp 32 and the tail lamp 34 partially overlap each other in an upper-lower direction. Specifically, the turn signal lamp 32 is formed with, at an inner end portion thereof in the vehicle width direction, a recessed portion recessed outward in the vehicle width direction, and the tail lamp 34 has an outer end portion thereof in the vehicle width direction located in the recessed portion. This increases a light emitting region in the vehicle width direction, thereby improving visibility of the rear lamp 28. Shapes of the turn signal lamp 32 and the tail lamp 34 are not limited thereto, and for example, the tail lamp 34 may be provided with a recessed portion recessed inward in the vehicle width direction at the outer end portion thereof in the vehicle width direction, and the turn signal lamp 32 may have the inner end portion thereof in the vehicle width direction disposed in the recessed portion.

In this manner, in the present embodiment, a total of six lamps including the two license lamps 26, the two tail lamps 34, and the two turn signal lamps 32 are housed inside the casing 30 of the lamp unit 20. The rear lamp 28 may also be only one of the turn signal lamp 32 and the tail lamp 34. In this case, four lamps are housed inside the casing 30 of the lamp unit 20.

The turn signal lamp 32 blinks to signal, for example, a vehicle and a pedestrian behind at the time of turning right and left. In the present embodiment, the tail lamp 34 is the stop lamp 34 that is turned on during braking to draw attention of a vehicle behind.

Alternatively, the tail lamp 34 may be a position lamp that notifies a vehicle and a pedestrian behind of presence of the motorcycle at night and in bad weather. The tail lamp 34 may be a lamp that serves as both a stop lamp and a position lamp.

As illustrated in FIG. 4, a rear surface 30a of the casing 30, that is, the light emitting surface 30a of the rear lamp 28 extends obliquely forward and toward an outer side in the vehicle width direction. This improves visibility of the rear lamp 28 not only from rearward but also from diagonally rearward and sideward.

In the present embodiment, the license lamp 26 and the rear lamp 28 are composed of light emitting diodes (LEDs) and are installed on a common substrate 36. That is, in the present embodiment, six LEDs are installed on the one substrate 36. The substrate 36 may be divided into a left substrate and a right substrate. In this case, three LEDs are installed on each of the left and right substrates. Further, one LED may be installed and light may be guided to left and right lamps by a light guide plate.

A plurality of cables 38 are bundled and connected to the substrate 36 by one connector 40. The cables 38 are wired inside the rear flap 22 illustrated in FIG. 1 and are connected to a control device (not illustrated) of the vehicle.

As illustrated in FIG. 3, the lamp unit 20 according to the present embodiment further includes a rear reflector 42 attached to the casing 30. That is, in the lamp unit 20 according to the present embodiment, the license lamps 26, the tail lamps 34, and the turn signal lamps 32 are accommodated in the casing 30, and the rear reflector 42 is attached to and integrated with the casing 30. Here, in detail, it may be described that light sources of the license lamps 26, the tail lamps 34, and the turn signal lamps 32 are accommodated in the casing 30.

The rear reflector 42 is a reflecting material that reflects light to shine when illuminated by a headlamp of a vehicle behind, and serves to indicate presence of the motorcycle even when no lamp is turned on during parking and stop at night. The rear reflector 42 may not be attached to the casing 30. That is, the rear reflector 42 may be provided separately from the lamp unit 20.

In the present embodiment, the rear reflector 42 is disposed between the two license lamps 26, 26 that are separated away from each other in the vehicle width direction. Specifically, as illustrated in FIG. 4, a recessed portion 44 recessed forward is formed between the two license lamps 26, 26, and the rear reflector 42 is disposed in the recessed portion 44. A position of the rear reflector 42 is not limited thereto, and may be, for example, below the turn signal lamp 32 or the stop lamp 34. As illustrated in Fig. 3, the rear reflector 42 is disposed forward of the light emitting surfaces 26a which are the lower portions of the license lamps 26. Also, as illustrated in Fig. 4, the rear reflector 42 is disposed rearward of the light sources of the license lamps 26.

As illustrated in FIG. 2, the recessed portion 44 has a size in the vehicle width direction substantially the same as or slightly larger than a size of the rearview radar 25 in the vehicle width direction. In a vehicle on which the rearview radar 25 is not mounted, the recessed portion 44 may be omitted.

According to the above configuration, by providing two license lamps 26 in the vehicle width direction and performing irradiation from two locations, the license plate 24 can be irradiated over a wide range, and a plate elongated in the vehicle width direction can also be suitably irradiated. In addition, since the license lamps 26 and the rear lamps 28 are housed in and integrated with the common casing 30, it is not necessary to perform wiring separately for each lamp, and the wiring and a support structure are simplified. In this manner, the lamp unit 20 of the present disclosure can achieve both simplification of the wiring and the support structure and wide irradiation of the license plate 24.

In the present embodiment, the rear lamp 28 includes the stop lamp 34 and the turn signal lamp 32 on the outer side thereof in the vehicle width direction. According to this configuration, since the turn signal lamp 32, the stop lamp 34, and the license lamp 26 are integrated, the wiring and the support structure are further simplified.

In the present embodiment, the rear reflector 42 is attached to the casing 30 of the lamp unit 20. According to this configuration, the casing 30 is also used for installation of the rear reflector 42, and thus the number of components can be reduced.

In the present embodiment, the rear reflector 42 is disposed between the two license lamps 26, 26 arranged side by side in the vehicle width direction. According to this configuration, space between the license lamps 26 can be effectively used.

In the present embodiment, as illustrated in FIG. 4, the license lamp 26 and the rear lamp 28 are LEDs and are installed on the common substrate 36. According to this configuration, the number of substrates of the LEDs can be reduced, and a power supply circuit can be shared.

In the present embodiment, the rear surface 30a of the casing 30 extends obliquely forward toward the outer side in the vehicle width direction. According to this configuration, a length of the casing 30 in the front-rear direction can be shortened to make the lamp unit 20 look compact.

In the present embodiment, as illustrated in FIG. 2, the rearview radar 25 is provided on the rear end portion of the vehicle body, and the lamp unit 20 is disposed below the rearview radar 25. When the rearview radar 25 is provided, it is necessary to dispose the license plate 24 and the lamp unit 20 while avoiding an irradiation range of the rearview radar 25. For example, when the license plate 24 and the lamp unit 20 are disposed below the rearview radar 25 while avoiding the irradiation range of the rearview radar 25, the rear flap 22 becomes large.

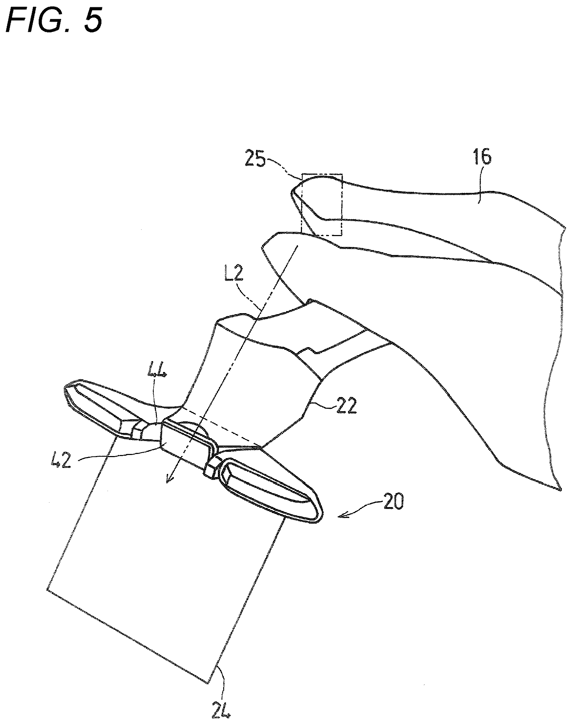

In the above embodiment, as illustrated in FIG. 3, the recessed portion 44 recessed forward is formed between the two license lamps 26, 26. Providing the recessed portion 44, as illustrated in FIG. 5, can prevent the lamp unit 20 from interfering with irradiation L2 of the rearview radar 25. That is, the license plate 24 and the lamp unit 20 can be arranged while avoiding the irradiation L2 of the rearview radar 25.

In addition, by applying the lamp unit 20 provided with the recessed portion 44 to a model on which the rearview radar 25 is not mounted, components can be shared between a model on which the rearview radar 25 is mounted and a model on which the rearview radar 25 is not mounted.

The lamp unit for the straddle-type vehicle of the present disclosure includes following aspects 1 to 8.

According to an aspect 1, a lamp unit for a straddle-type vehicle to be disposed on a rear end portion of a vehicle body includes: two license lamps separated away from each other in a vehicle width direction; and rear lamps disposed on outer sides of the respective license lamps in the vehicle width direction. The license lamps and the rear lamps are housed in a common casing.

According to an aspect 2, in the lamp unit for a straddle-type vehicle according to the aspect 1, each of the rear lamps includes a turn signal lamp and a stop lamp.

According to an aspect 3, in the lamp unit for a straddle-type vehicle according to the aspect 1 or 2, the lamp unit further includes a rear reflector attached to the casing.

According to an aspect 4, in the lamp unit for a straddle-type vehicle according to the aspect 3, the rear reflector is disposed between the two license lamps.

According to an aspect 5, in the lamp unit for a straddle-type vehicle according to any one of the aspects 1 to 4, the license lamps and the rear lamps are composed of LEDs and are installed on a common substrate.

According to an aspect 6, in the lamp unit for a straddle-type vehicle according to any one of the aspects 1 to 5, a rear surface of the casing extends obliquely forward and toward an outer side in the vehicle width direction.

According to an aspect 7, in the lamp unit for a straddle-type vehicle according to any one of the aspects 1 to 6, a recessed portion recessed forward is formed between the two license lamps.

According to an aspect 8, a straddle-type vehicle includes: the lamp unit according to the aspect 7; and a rearview radar configured to detect an object approaching from behind. The lamp unit is disposed below the rearview radar.

The present disclosure is not limited to the above embodiment, and various additions, modifications, and deletions can be made without departing from the gist of the present disclosure. The lamp unit 20 of the present disclosure can also be applied to a straddle-type vehicle other than a motorcycle, such as a three-wheeled vehicle and a four-wheeled buggy. Therefore, such a configuration is also included in the scope of the present disclosure.

## Claims

1. A lamp unit (20) for a straddle-type vehicle to be disposed on a rear end portion of a vehicle body, the lamp unit (20) comprising:
two license lamps (26) separated away from each other in a vehicle width direction; and
rear lamps (28) disposed on outer sides of the respective license lamps (26) in the vehicle width direction, wherein
the license lamps (26) and the rear lamps (28) are housed in a common casing (30).

2. The lamp unit (20) for the straddle-type vehicle according to claim 1, wherein each of the rear lamps (28) includes a turn signal lamp (32) and a stop lamp (34).

3. The lamp unit for the straddle-type vehicle according to claim 1 or 2, the lamp unit (20) further comprising:
a rear reflector (42) attached to the casing (30).

4. The lamp unit (20) for the straddle-type vehicle according to claim 3, wherein
the rear reflector (42) is disposed between the two license lamps (26).

5. The lamp unit (20) for the straddle-type vehicle according to any one of claims 1 to 4, wherein
the license lamps (26) and the rear lamps (28) are composed of LEDs and are installed on a common substrate (36).

6. The lamp unit (20) for the straddle-type vehicle according to any one of claims 1 to 5, wherein
a rear surface (30a) of the casing (30) extends obliquely forward and toward an outer side in the vehicle width direction.

7. The lamp unit (20) for the straddle-type vehicle according to any one of claims 1 to 6, wherein
a recessed portion (44) recessed forward is formed between the two license lamps (26).

8. A straddle-type vehicle comprising:
the lamp unit (20) according to claim 7; and
a rearview radar (25) configured to detect an object approaching from behind, wherein
the lamp unit (20) is disposed below the rearview radar (25).
